# FASCICULE DE BREVET EUROPEEN

(11) **EP 1 625 242 B1**
(45) Date de publication et mention de la délivrance du brevet: **12.11.2008**
(21) Numéro de dépôt: 04742726.5
(22) Date de dépôt: 14.05.2004
(51) Int. Cl.: C22F 1/04, C22F 1/047, C22F 1/057

(54) **PROCEDE DE SOUDAGE PAR FRICTION AGITATION DE PIECES EN ALLIAGE D'ALUMINIUM AVEC TRAITEMENT THERMIQUE AVANT SOUDAGE**
DREHENDES REIBSCHWEISSVERFAHREN VON WERKSTÜCKEN AUS ALUMINIUM-LEGIERUNG MIT EINER WÄRMEBEHANDLUNG VOR DEM SCHWEISSEN
METHOD FOR WELDING BY MEANS OF FRICTION - AGITATION OF ALUMINIUM ALLOY PARTS WITH HEAT TREATMENT PRIOR TO WELDING

(30) Priorité: 20.05.2003 FR 0306036
(43) Date de publication de la demande: 15.02.2006
(73) Titulaire: Alcan Rhenalu, 92400 Courbevoie (FR)
(72) Inventeur: EHRSTROM, Jean-Christophe, F-38130 Echirolles (FR); WARNER, Timothy, F-38340 Voreppe (FR)
(74) Mandataire: Fénot, Dominique
(86) Numéro de dépôt international: PCT/FR2004/001176
(87) Numéro de publication internationale: WO 2004/104258

(56) Documents cités:
- EP-A- 1 127 952
- EP-A- 1 334 793
- FR-A- 2 748 035
- US-A- 5 560 789
- US-B1- 6 168 067
- PATENT ABSTRACTS OF JAPAN vol. 2000, no. 12, 3 janvier 2001 (2001-01-03) & JP 2000 237882 A (SKY ALUM CO LTD), 5 septembre 2000 (2000-09-05)
- HATCH J E: "ALUMINUM PROPERTIES AND PHYSICAL METALLURGY, PASSAGE" ALUMINUM. PROPERTIES AND PHYSICAL METALLURGY, OHIO, AMERICAN SOCIETY FOR METALS, US, 1984, pages 1-4, XP000889406
- PATENT ABSTRACTS OF JAPAN vol. 2003, no. 05, 12 mai 2003 (2003-05-12) & JP 2003 027170 A (KOBE STEEL LTD), 29 janvier 2003 (2003-01-29)

## Description

L'invention concerne un procédé fabrication de pièces en alliage d'aluminium à durcissement structural obtenues par soudage par friction à l'outil, appelé également soudage par friction-malaxage (en anglais « friction stir welding » ou FSW) conformément au préambule de la revendication 1 (voir, par example, US-B1-6 168 067). On désigne par alliages d'aluminium à durcissement structural les alliages des séries 2xxx (Al-Cu), 4xxx (Al-Si), 6xxx (Al-Si-Mg), 7xxx (Al-Zn-Mg ou Al-Zn-Mg-Cu) ou 8xxx (Al-Li-Cu) selon la nomenclature de l'Aluminum Association. Ces alliages sont durcis par un traitement thermique comportant une mise en solution, une trempe et, le cas échéant, un revenu.

### Etat de la technique

Le soudage par friction à l'outil a été initié, au début des années 1990, par TWI (The Welding Institute) au Royaume-Uni, et a connu un développement rapide dans le domaine de l'assemblage des alliages d'aluminium. Son principe consiste à obtenir un soudage sans fusion par un fort cisaillement du métal au moyen d'un outil rotatif qui mélange les deux matériaux à assembler. La diminution de la contrainte d'écoulement est obtenue tout d'abord par un échauffement du métal par frottement d'un patin (« shoulder ») en surface du métal avant le déplacement de l'outil qui conduit de proche en proche au soudage. Le patin permet également de contenir le métal et de maintenir une pression en évitant l'éjection du métal en dehors de la zone soudée.

Le procédé permet d'éviter les problèmes de fissuration à chaud, ce qui permet notamment de souder des alliages considérés comme non soudables par fusion, comme par exemple les alliages 2xxx au magnésium ou les alliages 7xxx au cuivre, qui sont les alliages utilisés habituellement dans la construction aéronautique.

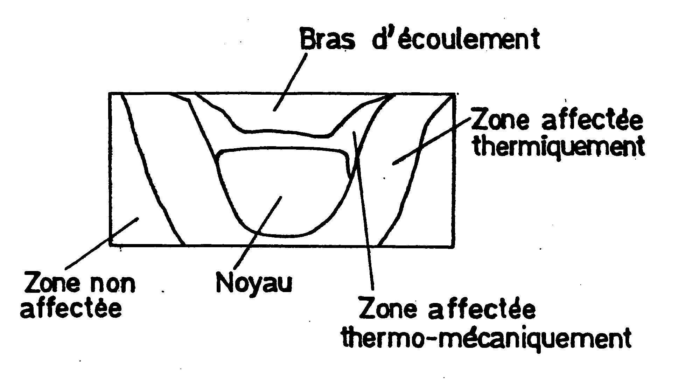

La structure métallurgique à l'intérieur et autour de la zone soudée par friction à l'outil offre un faciès très caractéristique et nettement différent de celui d'une soudure par fusion. En dehors des zones éloignées de la soudure qui restent totalement non affectées, on peut distinguer 3 zones distinctes, comme indiqué à la figure 1 :
- la zone ayant subi la déformation plastique la plus sévère est appelée le noyau (« nugget »). Elle présente une microstructure recristallisée très fine et relativement équiaxe, avec des décorations significatives aux joints de grain. En cours de soudage, la température peut atteindre 560°C dans cette zone. Elle présente par ailleurs une structure annulaire du type peau d'oignon. La largeur du noyau est généralement un peu supérieure au diamètre de l'outil.
- La seconde zone, située de part et d'autre du noyau est la zone affectée thermo-mécaniquement, qui a été déformée dans une moindre mesure, et qui peut, selon les alliages, montrer des signes de recristallisation.
- La troisième zone, située au dessus du noyau, est appelée «bras d'écoulement ». Elle est formée par l'effet de rotation du patin de l'outil.

Différentes configurations d'assemblage sont possibles, mais la plus couramment utilisée est le soudage bout à bout.

A l'issue du soudage par friction, les grains situés dans la noyau sont très petits, typiquement de l'ordre de quelques micromètres. Ces grains très fins contiennent à l'état brut de soudage une grande quantité d'énergie aux joints de grains de la zone soudée et de la zone affectée thermiquement, qui rend la microstructure instable.

Le point faible de toute pièce soudée, quel que soit le procédé utilisé, est la zone affectée thermiquement. Pour éliminer ce point faible, il est connu de procéder à une mise en solution du joint soudé de manière à retrouver une résistance mécanique élevée en tout point. Lors de cette mise en solution, l'énergie aux joints de grains peut être libérée. On constate alors que, dans le noyau et la zone d'écoulement, la dimension moyenne des grains a fortement augmenté, et peut atteindre plusieurs mm. Ce grossissement incontrôlé du grain est dû à une recristallisation dite secondaire. L'article de Kh. A. A. Hassan et al. « Stability of nugget zone grain structures in high-strength Al-alloy friction stir welds during solution treatment », publié dans Acta Materialia, vol. 51, 2003, pp. 1923-1936, décrit bien cette croissance anormale de la taille des grains, et indique comme solutions d'augmenter, soit la densité des dispersoïdes, conduisant à freiner ou bloquer ce processus de croissance, soit la quantité de chaleur générée par le soudage, conduisant à un grain moins fin à l'issue du soudage, renfermant une quantité moins élevée d'énergie stockée.

Une telle structure à grains grossiers n'est guère favorable à un bon comportement mécanique, notamment en ce qui concerne la ductilité, la ténacité et la tenue en fatigue, ce qui rend problématique toute mise en forme ultérieure et conduit à des ruptures intergranulaires. Le procédé selon l'invention a pour but de remédier à cet inconvénient.

### Objet de l'invention

L'invention a pour objet un procédé de fabrication de pièces en alliage d'aluminium à durcissement structural tel que défini dans la revendication 1.

La température T est généralement inférieure d'au plus 20°C à la température de brûlure de l'alliage, ou, dans le cas d'alliages différents, de la température de brûlure la plus basse de ces alliages

Dans le cas où la température de brûlure est inférieure à 500°C, la durée du traitement est d'au moins 24 h, et de préférence d'au moins 48 h.

### Description des figures

La figure 1 représente les différentes zones du joint soudé par friction à l'outil.

### Description de l'invention

Les désignations des alliages normalisés suivent les règles de The Aluminum Association. Les concentrations des éléments chimiques sont exprimées en pourcent massique.

L'invention consiste essentiellement à réaliser avant soudage un traitement thermique très poussé destiné à provoquer la coalescence des dispersoïdes, d'une durée significativement plus longue que la durée habituelle d'homogénéisation ou de mise en solution pour le même alliage. Pour être efficace, le traitement thermique selon l'invention doit se faire à une température T et avoir une durée d'au moins 2t₁, t₁ étant la durée typique de mise en solution, définie comme la durée d'un traitement à la température T conduisant à une énergie spécifique du pic de fusion, déterminée par analyse enthalpique différentielle (AED) inférieure en valeur absolue à 1 J/g, de préférence 0,5 J/g, et encore plus préférentiellement 0,1 J/g.

La température T est généralement aussi voisine que possible de la température dite de « brûlure » de l'alliage, tout en évitant d'atteindre cette température. Pratiquement, l'écart avec la température de brûlure doit, dans la plupart des cas, rester inférieur à 20°C.

Dans le cas où les éléments à souder sont en alliages différents, c'est la température de brûlure la plus basse qui doit être prise en compte. Pour les alliages dont la température de brûlure est inférieure à 500°C, la durée du traitement doit être de plus de 24 h, et de préférence de plus de 48 h.

L'invention peut être appliquée à tous les alliages d'aluminium à traitement thermique, mais de manière préférée à ceux dont la température de mise en solution optimale ne dépasse pas environ 500°C. On préfère les alliages de type Al-Zn-Cu-Mg (notamment ceux de la série 7xxx) et Al-Cu-Mg (série 2xxx) aux alliages de type Al-Cu-Mg-Li à forte teneur en lithium (supérieure à environ 1,2%) et aux alliages de la série 6xxx.

Le traitement thermique selon l'invention peut se situer à n'importe quel stade de la gamme de fabrication en amont du soudage. Il peut consister en une homogénéisation prolongée avant laminage, filage ou forgeage, en un réchauffage intermédiaire entre deux passes de laminage à chaud ou de forgeage, ou en un traitement du demi-produit laminé, filé ou forgé avant soudage. L'expérience montre de plus que les meilleurs résultats sont obtenus lorsque le maximum d'éléments d'addition se trouve en solution solide dans l'aluminium. On peut encore améliorer la structure métallurgique après soudage en limitant la teneur en dispersoïdes, par exemple en choisissant des compositions chimiques à faible taux d'éléments anti-recristallisants (Mn, Cr, Zr, Hf, V, Sc). Par exemple, pour un alliage de type 2024, il est préférable de limiter la teneur en manganèse à moins de 0,3% (dans ce cas, la composition de l'alliage ne correspond plus à la composition normalisée de l'alliage 2024, mais uniquement pour ce qui concerne la teneur en manganèse), et pour les alliages de la série 7xxx au cuivre, de limiter la teneur en chrome à moins de 0,15%, et la teneur en zirconium à moins de 0,09%. On entend par « alliage de la série 7xxx au cuivre » un alliage normalisé pour lequel la norme de composition spécifie une valeur minimale pour la concentration en cuivre (par exemple les alliages de type 7x49 : 7049, 7149, 7249, 7349, 7449, les alliages 7050, 7055, 7150, 7060, 7075, 7175, 7475), ou d'une manière plus générale un alliage de type Al-Zn-Mg-Cu présentant une teneur en cuivre d'au moins environ 0,5%.

Dans un mode de réalisation préféré de la présente invention, on transforme l'alliage à chaud (typiquement par laminage, filage ou forgeage), on effectue le traitement thermique destiné à provoquer la coalescence des dispersoïdes, on laisse refroidir à l'air, on effectue le soudage par friction à l'outil, et on effectue sur la pièce soudée un traitement de mise en solution suivi d'une trempe et d'un revenu.

La pièce soudée peut être réalisée à partir de tôles, de profilés ou de produits forgés. Ces produits peuvent être à l'état brut de fabrication (état F) ou à l'état traité par mise en solution, trempe et éventuellement revenu (états T3, T6 ou T7). Si on soude des tôles à l'état traité, c'est-à-dire ayant déjà subi une mise en solution dans les conditions habituelles, on constate que cette mise en solution est insuffisante pour obtenir une structure à grains fins après un traitement postérieur au soudage.

On observe généralement en cours de soudage la formation d'oxydes au coeur de la zone soudée. Ces oxydes peuvent être préjudiciables à la bonne tenue mécanique de la soudure. Pour éviter cette oxydation, il est avantageux de réaliser le soudage sous un balayage de gaz neutre.

Le procédé selon l'invention permet d'obtenir des pièces soudées par friction en alliage d'aluminium à durcissement structural qui, soumises après soudage à un traitement de mise en solution, trempe et revenu, présentent une zone soudée dans laquelle la taille de grains reste relativement homogène et inférieure à 200 µm, ce qui permet d'obtenir à la fois une bonne tenue en fatigue, une ténacité améliorée et une ductilité satisfaisante.De telles pièces peuvent être utilisées pour la fabrication d'éléments de structure en construction aéronautique.

### Exemples de pièces soudées et traitées obtenues par le procédé suivant l'invention

### Exemple 1

On a fabriqué des tôles en alliage 7449 de composition (% en poids) :

| | | | | | | | |
|---|---|---|---|---|---|---|---|
| Zn | Mg | Cu | Si | Fe | Zr | Cr | Ti |
| 8,11 | 2,19 | 1,94 | 0,04 | 0,07 | 0,09 | 0,005 | 0,025 |

par coulée semi-continue d'une plaque, homogénéisation de 30 mn à une température de 475°C et laminage à chaud jusqu'à une épaisseur de 10 mm. On a découpé des tôles de format 260 x 1000 mm. Ces tôles ont été traitées à l'état T651 par mise en solution de 1/2 h à 474°C, une trempe à l'eau froide, une traction contrôlée à 2,5% d'allongement permanent et un revenu de 48 h à 120°C.

Les tôles ont été soudées bout à bout par friction à l'aide d'une machine ESAB type « Superstir ». La tête de l'outil était inclinée de 2,5 degrés. La vitesse de rotation de l'outil était de 150 t/mn et sa vitesse d'avance de 200 mm/mn.

Les tôles assemblées ont été soumises, après soudage, à un traitement thermique comportant une mise en solution de 30 mn à 474°C, suivie d'une trempe à l'eau froide (20°C). Une micrographie d'échantillons de la zone soudée traités par oxydation anodique pour révéler la structure granulaire fait apparaître une structure recristallisée à grains de taille supérieure à 200 µm, avec une forte dispersion, certains grains pouvant atteindre plusieurs mm.

### Exemple 2

Des tôles identiques à celles qui ont été soudées dans l'exemple 1 ont été soumises à un traitement d'homogénéisation de 72 h à 474°C. Elles ont été soudées dans les mêmes conditions que celles de l'exemple 1.

La micrographie de la zone soudée révèle une structure cristalline fine avec une taille de grains relativement homogène, comprise entre 50 et 200 µm, avec une moyenne de l'ordre de 120 µm.

## Revendications

1. Procédé de fabrication de pièces en alliage d'aluminium à durcissement structural comportant le soudage par friction à l'outil d'au moins deux éléments du même alliage ou d'alliages différents, **caractérisé par** la mise en solution et la trempe des pièces soudées, dans lequel les éléments sont soumis avant soudage à un traitement thermique, à une température T d'une durée d'au moins 2t₁, t₁ étant définie comme la durée minimale d'un traitement à la température T conduisant à une énergie spécifique du pic de fusion, définie par AED, de moins de 1 J/g.

2. Procédé selon la revendication 1, **caractérisé en ce que** l'énergie spécifique du pic de fusion est de moins de 0,5 J/g.

3. Procédé selon la revendication 2, **caractérisé en ce que** l'énergie spécifique du pic de fusion est de moins de 0,1 J/g.

4. Procédé selon l'une des revendications 1 à 3, **caractérisé en ce que** la température T est inférieure d'au plus 20°C à la température de brûlure de l'alliage, ou, dans le cas d'alliages différents, de la température de brûlure la plus basse de ces alliages.

5. Procédé selon l'une des revendications 1 à 4, **caractérisé en ce que** la température de brûlure de l'alliage est inférieure à 500°C et que la durée du traitement est d'au moins 24 h.

6. Procédé selon la revendication 5, **caractérisé en ce que** la durée de traitement est d'au moins 48 h.

7. Procédé selon l'une des revendications 1 à 6, **caractérisé en ce que** le traitement thermique se situe au stade de l'homogénéisation avant laminage, filage ou forgeage.

8. Procédé selon l'une des revendications 1 à 6, **caractérisé en ce que** le traitement thermique est un réchauffage entre deux passes de laminage, filage ou forgeage.

9. Procédé selon l'une des revendications 1 à 6, **caractérisé en ce que** le traitement thermique est effectué sur le demi-produit laminé ou forgé avant le soudage.

10. Procédé selon la revendication 9, **caractérisé en ce que** le traitement thermique est suivi d'une trempe.

11. Procédé selon l'une des revendications 1 à 10, **caractérisé en ce que** l'un au moins des alliages est du type 2024 et que sa teneur pondérale en manganèse est inférieure à 0,3%.

12. Procédé selon l'une des revendications 1 à 10, **caractérisé en ce que** l'un au moins des alliages est un alliage de la série 7xxx au cuivre, que sa teneur pondérale en chrome est inférieure à 0,15% et que sa teneur pondérale en zirconium est inférieure à 0,09%.

13. Procédé selon la revendication 12, dans lequel la teneur en cuivre est d'au moins 0,5%.

14. Procédé selon l'une des revendications 1 à 13, **caractérisé en ce que** la surface des éléments à souder est balayée avec un gaz neutre pendant le soudage.

15. Pièce constituée d'au moins deux éléments en alliage d'aluminium à durcissement structural soudés par friction à l'outil et traitée après soudage par mise en solution et trempe, **caractérisée en ce que** la taille de grains dans la zone soudée après mise en solution et trempe est comprise entre 50 et 200 µm, avec une moyenne de l'ordre de 120 µm.

16. Utilisation d'une pièce selon la revendication 15 en construction aéronautique.

## Claims

1. A manufacturing process for age-hardened aluminum alloy parts comprising friction stir welding of at least two elements of the same alloy or of different alloys, **characterized by** solution heat treatment and hardening of the welded parts, in which the elements are subjected before welding to heat treatment, at a temperature T lasting at least 2t₁, t₁ being defined as the minimum duration for a treatment at temperature T leading to a specific energy of the fusing peak, defined by DEA, of less than 1 J/g.

2. A process according to claim 1, **characterized in that** the specific energy of the fusing peak is less than 0.5 J/g.

3. A process according to claim 2, **characterized in that** the specific energy of the fusing peak is less than 0.1 J/g.

4. A process according to one of claims 1 to 3 **characterized in that** temperature T is generally lower by at the most 20°C than the burn-through temperature of the alloy, or, in the case of different alloys, than the lowest burn-through temperature of these alloys.

5. A process according to one of claims 1 to 4, **characterized in that** the burn-through temperature of the alloy is lower than 500°C and that the treatment time is at least 24 hours.

6. A process according to claim 5, **characterized in that** the treatment time is at least 48 hours.

7. A process according to one of claims 1 to 6, **characterized in that** the heat treatment takes place at the homogenization stage before rolling, spinning or forging.

8. A process according to one of claims 1 to 6, **characterized in that** the heat treatment consists of reheating between two rolling, spinning or forging runs.

9. A process according to one of claims 1 to 6, **characterized in that** the heat treatment is carried out on the semi-fmished product, rolled or forged before welding.

10. A process according to claim 9, **characterized in that** the heat treatment is followed by hardening.

11. A process according to one of claims 1 to 10, **characterized in that** at least one of the alloys is of type 2024 and that its manganese content by weight is lower than 0.3%.

12. A process according to one of claims 1 to 10, **characterized in that** at least one of the alloys is a series 7xxx alloy with copper, that its chromium content by weight is lower than 0.15% and that its zirconium content by weight is lower than 0.09%.

13. A process according to claim 12, in which the copper content is at least 0.5%.

14. A process according to one of claims 1 to 13, **characterized in that** the surface of the elements to be welded is swept with a neutral gas during welding.

15. A part made up of at least two age-hardened aluminum alloy elements welded by friction stir welding and treated after welding by solution heat treatment and hardening, **characterized in that** the grain size in the zone welded after solution heat treatment and hardening lies between 50 and 200 µm, with an average of about 120 µm.

16. Use of a part according to claim 15 in aeronautical engineering.

## Patentansprüche

1. Verfahren zur Herstellung von Werkstücken aus aushärtbarer AluminiumLegierung, umfassend das Reibschweißen mindestens zweier Elemente aus der gleichen Legierung oder aus unterschiedlichen Legierungen mit einem Werkzeug, **gekennzeichnet durch** das Lösungsglühen und das Abschrecken der geschweißten Elemente, bei dem die Elemente vor dem Schweißen einer Wärmebehandlung unterzogen werden, bei einer Temperatur T für eine Dauer von mindestens 2t₁, wobei t₁ definiert ist als die Mindestdauer einer Behandlung bei der Temperatur T, die zu einer mittels DSC bestimmten, schmelzpeakspezifischen Energie von mindestens 1 J/g führt.

2. Verfahren nach Anspruch 1, **dadurch gekennzeichnet, dass** die schmelzpeakspezifische Energie weniger als 0,5 J/g beträgt.

3. Verfahren nach Anspruch 2, **dadurch gekennzeichnet, dass** die schmelzpeakspezifische Energie weniger als 0,1 J/g beträgt.

4. Verfahren nach einem der Ansprüche 1 bis 3, **dadurch gekennzeichnet, dass** die Temperatur T um höchstens 20° unter der Brenntemperatur der Legierung oder bei unterschiedlichen Legierungen unter der niedrigsten Brenntemperatur dieser Legierungen liegt.

5. Verfahren nach einem der Ansprüche 1 bis 4, **dadurch gekennzeichnet, dass** die Brenntemperatur der Legierung unterhalb 500°C liegt und die Dauer der Behandlung mindestens 24 h beträgt.

6. Verfahren nach Anspruch 5, **dadurch gekennzeichnet, dass** die Behandlungsdauer mindestens 48 h beträgt.

7. Verfahren nach einem der Ansprüche 1 bis 6, **dadurch gekennzeichnet, dass** die Wärmebehandlung in der Homogenisierungsstufe vor dem Walzen, Strangpressen oder Schmieden stattfindet.

8. Verfahren nach einem der Ansprüche 1 bis 6, **dadurch gekennzeichnet, dass** die Wärmebehandlung eine Erwärmung zwischen zwei Walz-, Strangpress- oder Schmiedegängen ist.

9. Verfahren nach einem der Ansprüche 1 bis 6, **dadurch gekennzeichnet, dass** die Wärmebehandlung an dem gewalzten oder geschmiedeten Halbzeug vor dem Schweißen durchgeführt wird.

10. Verfahren nach Anspruch 9, **dadurch gekennzeichnet, dass** auf die Wärmebehandlung ein Abschrecken folgt.

11. Verfahren nach einem der Ansprüche 1 bis 10, **dadurch gekennzeichnet, dass** mindestens eine der Legierungen vom Typ 2024 ist und ihr Gewichtsgehalt an Mangan weniger als 0,3 % beträgt.

12. Verfahren nach einem der Ansprüche 1 bis 10, **dadurch gekennzeichnet, dass** mindestens eine der Legierungen eine Kupferlegierung der Serie 7xxx ist, ihr Gewichtsgehalt an Chrom weniger als 0,15 % beträgt und ihr Gewichtsgehalt an Zirkonium weniger als 0,09 % beträgt.

13. Verfahren nach Anspruch 12, wobei der Kupfergehalt mindestens 0,5 % beträgt.

14. Verfahren nach einem der Anspräche 1 bis 13, **dadurch gekennzeichnet, dass** die Oberfläche der zu verschweißenden Elemente beim Schweißen mit einem neutralen Gas gespült wird.

15. Werkstück bestehend aus mindestens zwei mit einem Werkzeug reibverschweißten und nach dem Schweißen durch Lösungsglühen und Abschrecken behandelten Elementen aus aushärtbarer Aluminiumlegierung, **dadurch gekennzeichnet, dass** die Korngröße in der Schweißzone nach Lösungsglühen und Abschrecken zwischen 50 und 200 µm liegt, mit einem Mittelwert von etwa 120 µm.

16. Verwendung eines Werkstücks nach Anspruch 15 im Flugzeugbau.
